# EUROPEAN PATENT APPLICATION

(11) **EP 3 173 930 A1**
(43) Date of publication of application: **31.05.2017**
(21) Application number: 16198338.2
(22) Date of filing: 11.11.2016
(51) Int. Cl.: G06F 11/10

(54) **DATA PLACEMENT BASED ON LIKELIHOODS OF CORRELATED STORAGE-DEVICE FAILURES**

(30) Priority: 25.11.2015 US 201562259684 P
(71) Applicant: Strato Scale Ltd., 4673314 Herzliya (IL)
(72) Inventor: TRAEGER, Avishay, Modi'in (IL); BEN-YEHUDA, Muli, 3479264 Haifa (IL)
(74) Representative: Beck Greener

(57) **Abstract**

A storage apparatus includes an interface and a processor. The interface is configured to communicate with a plurality of storage devices. The processor is configured to estimate likelihood metrics that are indicative of likelihoods that respective subsets of the storage devices will fail concurrently, to select from among the plurality of the storage devices, based on the likelihood metrics, a group of the storage devices on which to store given data and redundancy information associated with the given data, and to store the given data and the redundancy information on the storage devices in the selected group.

## Description

### FIELD OF THE INVENTION

The present invention relates generally to data storage, and particularly to methods and systems for data placement based on likelihoods of correlated storage-device failures.

### BACKGROUND OF THE INVENTION

Redundant storage schemes are used in a variety of storage systems. Some redundant storage schemes store duplicate copies of data on different storage devices. Other redundant storage schemes compute redundancy bits, such as parity, checksum or Error Correction Coding (ECC) bits, over the data, and store the redundancy bits on different storage devices.

### SUMMARY OF THE INVENTION

An embodiment of the present invention that is described herein provides a storage apparatus including an interface and a processor. The interface is configured to communicate with a plurality of storage devices. The processor is configured to estimate likelihood metrics that are indicative of likelihoods that respective subsets of the storage devices will fail concurrently, to select from among the plurality of the storage devices, based on the likelihood metrics, a group of the storage devices on which to store given data and redundancy information associated with the given data, and to store the given data and the redundancy information on the storage devices in the selected group.

In some embodiments, the subsets for which the likelihood metrics are estimated include pairs of the storage devices. In some embodiment, the redundancy information includes a copy of the given data, or one or more redundancy bits that are computed over the given data.

In various embodiments, the processor is configured to estimate a likelihood metric, for a subset of the storage devices, as a function of respective serial numbers or manufacturing dates of the storage devices in the subset, as a function of respective types of storage media of the storage devices in the subset, as a function of respective storage capacities of the storage devices in the subset, as a function of respective operating conditions of the storage devices in the subset, and/or as a function of respective self-monitoring parameters reported by the storage devices in the subset.

In some embodiments, the processor is configured to update one or more of the likelihood metrics along a lifetime of the storage devices. In an embodiment, the processor is configured to update selection of the group based on the updated likelihood metrics. In another embodiment, the processor is configured to move the given data or the redundancy information to a different storage device, in response to the updated likelihood metrics.

There is additionally provided, in accordance with an embodiment of the present invention, a method for data storage including estimating likelihood metrics, which are indicative of likelihoods that respective subsets of a plurality of storage devices will fail concurrently. A group of the storage devices, on which to store given data and redundancy information associated with the given data, is selected from among the plurality of the storage devices based on the likelihood metrics. The given data and the redundancy information are stored on the storage devices in the selected group.

There is further provided, in accordance with an embodiment of the present invention, a computer software product, the product including a tangible non-transitory computer-readable medium in which program instructions are stored, which instructions, when read by a processor, cause the processor to communicate with a plurality of storage devices, to estimate likelihood metrics that are indicative of likelihoods that respective subsets of the storage devices will fail concurrently, to select from among the plurality of the storage devices, based on the likelihood metrics, a group of the storage devices on which to store given data and redundancy information associated with the given data, and to store the given data and the redundancy information on the storage devices in the selected group.

The present invention will be more fully understood from the following detailed description of the embodiments thereof, taken together with the drawings in which:

### BRIEF DESCRIPTION OF THE DRAWINGS

Fig. 1 is a block diagram that schematically illustrates a storage system, in accordance with an embodiment of the present invention; and
Fig. 2 is a flow chart that schematically illustrates a method for data storage, in accordance with an embodiment of the present invention.

### DETAILED DESCRIPTION OF EMBODIMENTS

### OVERVIEW

Embodiments of the present invention that are described herein provide improved methods and systems for redundant data storage. In particular, the disclosed methods and systems reduce the likelihood of data loss due to simultaneous failure of storage devices.

In some embodiments, a storage system comprises multiple storage devices, for example Hard Disk Drives (HDDs) and/or Solid state Drives (SSDs). A processor in the system, e.g., a storage controller, stores data redundantly over the various storage devices. For given data, the processor typically produces redundancy information associated with the given data, and stores the given data and the redundancy information on a selected group of storage devices referred to as a "stripe." The redundancy information may comprise, for example, one or more duplicate copies of the given data, or one or more redundancy bits computed over the given data.

In the disclosed techniques, the processor estimates and records likelihood metrics that are referred to herein as "Likelihoods of Correlated Failure" (LCFs). Each LCF corresponds to a pair of storage devices, and is indicative of the likelihood that both storage devices in this pair will exhibit failure simultaneously. Example parameters over which the processor may estimate LCFs are suggested below. The processor uses the LCFs for specifying the stripes, i.e., for selecting groups of storage devices on which to store the data and its associated redundancy information.

Typically, the processor assigns storage devices to stripes in a manner that minimizes the likelihood that multiple storage devices in the same stripe will exhibit failure simultaneously. Put in another way, the processor typically aims to group in the same stripe storage devices having small LCFs, and to assign storage devices having high LCFs to different stripes.

In some embodiments, the processor monitors the states and/or operating conditions of the storage devices over time, and updates the LCFs as appropriate. The processor may update the assignment of storage devices to stripes to reflect the updated LCFs. Additionally or alternatively, the processor may migrate data and/or redundancy information from one storage device to another to better match the updated LCFs.

By specifying stripes based on LCFs, the disclosed techniques reduce the likelihood of data loss due to correlated storage-device failures. As a result, storage reliability can be improved considerably. The disclosed techniques can also be used for reducing the amount of redundancy needed for a given reliability level, thereby reducing system cost and increasing storage capacity.

### SYSTEM DESCRIPTION

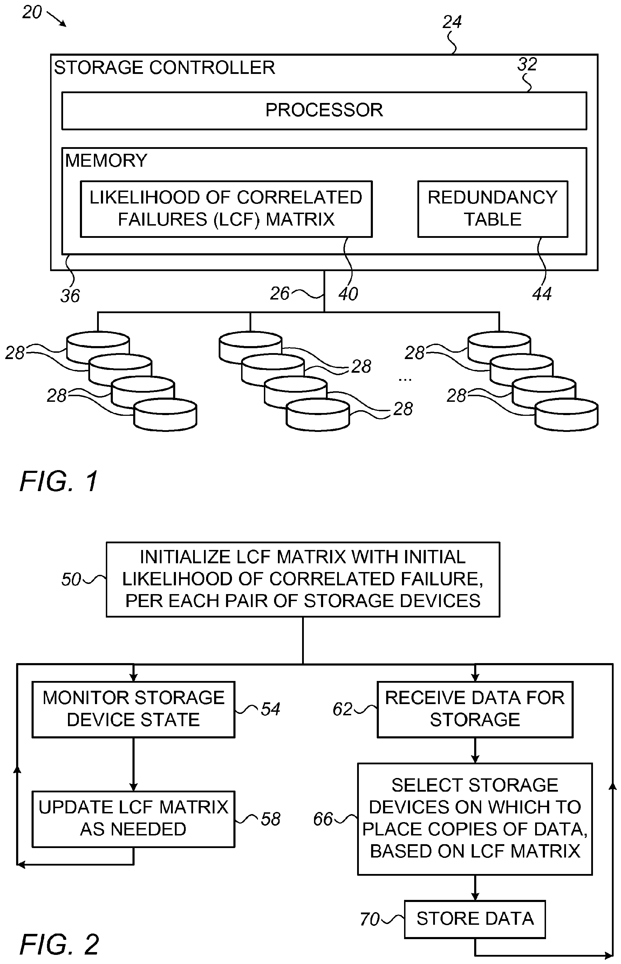

Fig. 1 is a block diagram that schematically illustrates a storage system 20, in accordance with an embodiment of the present invention. System 20 may be used, for example, in a data center or in any other suitable environment. In the present example, system 20 comprises a storage controller 24 that stores data in a plurality of storage devices 28.

Storage devices 28 may comprise, for example, Hard Disk Drives (HDDs) and/or Solid state Drives (SSDs). In some embodiments system 20 is highly heterogeneous in terms of storage media, e.g., comprises a large number (e.g., hundreds) of storage devices 28 of different vendors, storage media types, capacities, ages and other characteristics.

In the embodiment of Fig. 1, storage controller 24 comprises an interface 26 for communicating with storage devices 28, a processor 32 that carries out the methods described herein, and a memory 36 used for storing relevant metadata and other information for use by processor 32. interface 26 may comprise, for example, a Network interface Controller (NIC) or any other suitable interface. Memory 36 may comprise, for example, a Random Access Memory (RAM) or Flash memory.

In some embodiments, processor 32 stores in memory 36 two data structures - a "Likelihood of Correlated Failures" (LCF) matrix 40 and a redundancy table 44. As will be explained in detail below, LCF matrix 40 holds likelihood metrics indicative of likelihoods that pairs of storage devices 28 will exhibit failure simultaneously. Redundancy table 44 specifies an assignment of storage devices 28 to stripes, and assignment that is specified by processor 32 based on the LCFs.

The system configuration shown in Fig. 1 is an example configuration that is chosen purely for the sake of conceptual clarity. In alternative embodiments, any other suitable configuration can be used. For example, system 20 may comprise multiple servers that are interconnected by a network, and storage devices 28 may reside in these servers. In such an embodiment, processor 32 may comprise a dedicated processor, e.g., in a storage controller. Alternatively, the functionality of processor 32 may be carried out by one or more processors of the servers mentioned above. Further alternatively, the disclosed techniques can be used in any other suitable system or environment that involves data storage across multiple storage devices.

The various elements of system 20 may be implemented using hardware/firmware, such as in one or more Application-Specific Integrated Circuit (ASICs) or Field-Programmable Gate Array (FPGAs). Alternatively, some system elements may be implemented in software or using a combination of hardware/firmware and software elements. In some embodiments, processor 32 may comprise a general-purpose processor, which is programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

### ASSIGNMENT OF STORAGE DEVICES TO STRIPES BASED ON LIKELIHOODS OF CORRELATED FAILURE

In some embodiments, processor 32 receives data for storage, and stores the data redundantly in storage devices 28. In order to store given data redundantly, processor 32 produces redundancy information associated with the given data, and stores the given data and the redundancy information on a selected group of two or more storage devices (a "stripe").

In some embodiments, the redundancy information comprises one or more duplicate copies of the given data. In other embodiments, the redundancy information comprises one or more redundancy bits computed over the given data, e.g., parity or checksum (e.g., Cyclic Redundancy Check - CRC), Error Correction Coding (ECC) bits produced in accordance with some error correction code, e.g., erasure codes, or any other suitable kind of redundancy bits. Generally speaking, the redundancy information may comprise any suitable kind of information, data or metadata that enables processor 32 to reconstruct the given data in case the given data itself is lost or corrupted.

In some embodiments, processor 32 estimates LCFs for some or all pairs of storage devices 28, and records the LCFs in LCF matrix 40. Processor 32 assigns storage devices to stripes based on the LCFs. The processor records the assignment of storage devices to stripes in redundancy table 44.

In these embodiments, each LCF in matrix 40 corresponds to a pair of storage devices 28, and is indicative of the likelihood that both storage devices in the pair will exhibit failure simultaneously. Processor 32 may estimate the full matrix of LCFs, corresponding to all possible pairs of storage devices 28 in system 20, or only a partial matrix accounting for only some of the pairs.

LCF matrix 40 described above is depicted purely by way of example, in order to demonstrate one possible data structure that may be used for storing likelihood metrics indicative of likelihoods of correlated storage-device failures. In alternative embodiments, processor 32 may estimate any other suitable sort of likelihood metrics, and store the metrics in any other suitable data structure or structures. For example, processor 32 may store a list of groups of storage devices, such that each group comprises storage devices that are estimated to be likely to fail simultaneously. In such an embodiment, processor 32 attempts to assign to a given stripe storage devices belonging to different groups, i.e., avoids assigning storage devices from the same group to the same stripe. As yet another example, processor 32 may store a list of the storage devices sorted by predicted failure date/time. In such an embodiment, processor 32 attempts to assign to a given stripe storage devices drawn from different areas of the list, i.e., avoids assigning to the same stripe storage devices that are located close to one another on the list.

In the present context, the term "storage devices fail simultaneously" refers to any and all cases in which one storage device fails before the other storage device is restored or the data on it recovered. In an example scenario, two storage devices fail one slightly after the other, but within a time interval that is too short for recovering the first storage device or the data stored on it. This sort of scenario is also regarded herein as simultaneous failure of the storage devices, and is also mitigated by the disclosed techniques.

In various embodiments, processor 32 may compute the LCFs depending on various parameters of storage devices 28. In some embodiments, processor 32 may compute a given LCF as a function of the types, serial numbers, manufacturing dates and/or types of the storage devices in the pair (assuming that storage devices of the same production batch have similar failure modes and are more likely to fail approximately at the same time).

Additionally or alternatively, processor 32 may compute a given LCF as a function of the underlying technologies of the storage devices in the pair (e.g., magnetic vs. solid state media, or process technology of solid state devices), and/or the storage capacities of the storage devices in the pair. Further additionally or alternatively, processor 32 may compute a given LCF as a function of the operating conditions (e.g., levels of temperature, vibration and/or acoustic noise) of the storage devices in the pair (or of the servers in which the storage devices reside).

Further additionally or alternatively, processor 32 may compute a given LCF as a function of self-monitoring parameters reported by the storage devices in the pair (e.g., Self-Monitoring, Analysis and Reporting Technology ("SMART") data). Some SMART attributes that may be indicative of imminent failure comprise, for example, "Reallocated Sectors Count," "Spin Retry Count," "SATA Downshift Error Count or Runtime Bad Block," "End-to-End error / IOEDC," "Reported Uncorrectable Errors," "Command Timeout," "Reallocation Event Count," "Current Pending Sector Count," "Uncorrectable Sector Count or Offline Uncorrectable Off-Line Scan Uncorrectable Sector Count," "Soft Read Error Rate or TA Counter Detected," and/or "Drive Life Protection Status." Other SMART data that may be used for estimating LCF values comprise attributes such as temperature, the length of time the storage device has been in use, and others. Any of these attributes, or combinations of attributes, may be used for estimating the LCFs.

The parameters listed above are example parameters that were chosen purely for the sake of conceptual clarity. In alternative embodiments, processor 32 may estimate the LCFs based on any other suitable parameters that are indicative of the likelihood of concurrent failure of storage devices. Although the embodiments described herein refer mainly to pairs of storage devices, the disclosed techniques can be generalized in a straightforward manner to estimate LCFs for larger subsets of storage devices.

Processor 32 may use various methods and criteria for assigning storage devices to stripes based on the LCFs. Typically, processor 32 assigns storage devices to stripes in a way that aims to reduce or minimize the likelihood that multiple storage devices in the same stripe will exhibit failure simultaneously. In other words, processor 32 typically aims to group in the same stripe storage devices having small LCFs, and to assign storage devices having high LCFs to different stripes.

In accordance with one example criterion, processor 32 attempts to specify stripes such that MAX(LCF(Di,Dj)) per stripe is as small as possible, wherein (Di,Dj) denote all pairs of storage devices in the stripe. Alternatively, any other suitable criterion can be used.

In some embodiments, processor 32 monitors the states and/or operating conditions of storage devices 28 during operation of system 20, e.g., periodically, and updates the LCFs in matrix 40 as appropriate. In an embodiment, processor 32 may update the assignment of storage devices to stripes and update table 44 to reflect the updated LCFs. Additionally or alternatively, processor 32 may migrate data and/or redundancy information from one storage device to another to better match the updated LCFs.

Consider, for example, a scenario in which processor 32 detects a significant increase in the LCF of a pair of storage device belonging to the same stripe. For example, the SMART data reported by the storage devices may indicate that their "Total LBAs Written" or "Power-On Hours" attributes are excessively high. In response, processor 32 may decide to migrate data or metadata of the stripe, from one or both of these storage devices to one or more other storage devices.

Fig. 2 is a flow chart that schematically illustrates a method for data storage, carried out by processor 32 of system 20, in accordance with an embodiment of the present invention. The method begins at an initialization step 50, in which processor 32 initializes LCF matrix 40 with initial LCF values.

After initialization, processor 32 carries out two parallel but interlinked processes:
1) At a monitoring step 54, processor 32 monitors the states and/or operating conditions of one or more of storage devices 28. At an LCF updating step 58, processor 32 updates one or more of the LCFs in matrix 58 to reflect changes in the monitored storage-device states and/or operating conditions. The monitoring and updating process of steps 54-58 continues during operation of system 20, e.g., at periodic intervals.
2) At a data reception step 62, processor 32 receives data for storage. At a stripe definition step 66, processor 32 selects, based on the LCFs, a group of two or more storage devices 28 on which to store duplicate copies of the data. At a storage step 70, processor 32 stores the copies of the data on the storage devices of the selected stripe. The storage process of steps 62-70 is also repeated continually.

The flow of Fig. 2 is an example flow, which is depicted purely for the sake of conceptual clarity. In alternative embodiments, any other suitable flow can be used. For example, processor 32 may assign storage devices to stripes (step 66) in advance, and not in response to receiving data for storage.

It will be appreciated that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

Embodiments of the present invention have been described with particular reference to the examples illustrated. However, it will be appreciated that variations and modifications may be made to the examples described within the scope of the present invention.

## Claims

1. A storage apparatus (20), comprising:
an interface (26), configured to communicate with a plurality of storage devices (28); and
a processor (32), configured to:
estimate likelihood metrics that are indicative of likelihoods that respective subsets of the storage devices will fail concurrently;
select from among the plurality of the storage devices, based on the likelihood metrics, a group of the storage devices on which to store given data and redundancy information associated with the given data; and
store the given data and the redundancy information on the storage devices in the selected group.

2. The apparatus according to claim 1, wherein the subsets, for which the likelihood metrics are estimated, comprise pairs of the storage devices.

3. The apparatus according to claim 1 or 2, wherein the redundancy information comprises a copy of the given data, or one or more redundancy bits that are computed over the given data.

4. The apparatus according to any of claims 1-3, wherein the processor is configured to estimate a likelihood metric, for a subset of the storage devices, as a function of respective serial numbers or manufacturing dates of the storage devices in the subset.

5. The apparatus according to any of claims 1-3, wherein the processor is configured to estimate a likelihood metric, for a subset of the storage devices, as a function of respective types of storage media of the storage devices in the subset.

6. The apparatus according to any of claims 1-3, wherein the processor is configured to estimate a likelihood metric, for a subset of the storage devices, as a function of respective storage capacities of the storage devices in the subset.

7. The apparatus according to any of claims 1-3, wherein the processor is configured to estimate a likelihood metric, for a subset of the storage devices, as a function of respective operating conditions of the storage devices in the subset.

8. The apparatus according to any of claims 1-3, wherein the processor is configured to estimate a likelihood metric, for a subset of the storage devices, as a function of respective self-monitoring parameters reported by the storage devices in the subset.

9. The apparatus according to any of claims 1-3, wherein the processor is configured to update one or more of the likelihood metrics along a lifetime of the storage devices.

10. The apparatus according to claim 9, wherein the processor is configured to update selection of the group based on the updated likelihood metrics.

11. The apparatus according to claim 9, wherein the processor is configured to move the given data or the redundancy information to a different storage device, in response to the updated likelihood metrics.

12. A method for data storage, comprising:
estimating likelihood metrics, which are indicative of likelihoods that respective subsets of a plurality of storage devices (28) will fail concurrently;
selecting from among the plurality of the storage devices, based on the likelihood metrics, a group of the storage devices on which to store given data and redundancy information associated with the given data; and
storing the given data and the redundancy information on the storage devices in the selected group.

13. The method according to claim 12, wherein the subsets, for which the likelihood metrics are estimated, comprise pairs of the storage devices.

14. The method according to claim 12 or 13, wherein the redundancy information comprises a copy of the given data, or one or more redundancy bits that are computed over the given data.

15. A computer software product, the product comprising a tangible non-transitory computer-readable medium in which program instructions are stored, which instructions, when read by a processor (32), cause the processor to communicate with a plurality of storage devices (28), to estimate likelihood metrics that are indicative of likelihoods that respective subsets of the storage devices will fail concurrently, to select from among the plurality of the storage devices, based on the likelihood metrics, a group of the storage devices on which to store given data and redundancy information associated with the given data, and to store the given data and the redundancy information on the storage devices in the selected group.
